# EUROPEAN PATENT SPECIFICATION

(11) **EP 2 134 804 B1**
(45) Date of publication and mention of the grant of the patent: **15.11.2017**
(21) Application number: 08729407.0
(22) Date of filing: 08.02.2008
(51) Int. Cl.: C09K 8/36

(54) **INVERT EMULSION DRILLING FLUIDS AND METHOD FOR VISCOSIFYING INVERT EMULSION DRILLING FLUIDS**
UMKEHREMULSIONEN DARSTELLENDEN BOHRSCHLÄMMEN UND VERFAHREN ZUR VISKOSIFIZIERUNG VON UMKEHREMULSIONEN DARSTELLENDEN BOHRSCHLÄMMEN
FLUIDES DE FORAGE EN ÉMULSION INVERSE ET PROCÉDÉ PERMETTANT DE RENDRE PLUS VISQUEUX DES FLUIDES DE FORAGE EN ÉMULSION INVERSE

(30) Priority: 14.02.2007 US 889842 P
(43) Date of publication of application: 23.12.2009
(73) Proprietor: M-I L.L.C., Houston, TX 77072 (US)
(72) Inventor: TEHRANI, Ahmadi, Banchory, Kincardineshire AB31 5ZN (GB)
(74) Representative: Gill, Stephen Charles
(86) International application number: PCT/US2008/053440
(87) International publication number: WO 2008/100825

(56) References cited:
- US-A- 5 096 883
- US-A- 5 189 012
- US-A- 5 376 629
- US-A- 5 559 085

## Description

### BACKGROUND

In rotary drilling of subterranean wells numerous functions and characteristics are expected of a drilling fluid. A drilling fluid should circulate throughout the well and carry cuttings from beneath the bit, transport the cuttings up the annulus, and allow their separation at the surface. At the same time, the drilling fluid is expected to cool and clean the drill bit, reduce friction between the drill string and the sides of the hole, and maintain stability in the borehole's uncased sections. The drilling fluid should also form a thin, low permeability filter cake that seals openings in formations penetrated by the bit and acts to reduce the unwanted influx of formation fluids from permeable rocks.

Drilling fluids, generally referred to as "muds", are typically classified according to their base material. In oil-based drilling fluids, solid particles are suspended in oil, and water or brine may be emulsified with the oil to form an invert emulsion. The oil is the continuous phase in invert emulsion oil-based drilling fluids. In water-based drilling fluids, solid particles are suspended in water or brine, and oil may be emulsified in the water such that water is the continuous phase. Pneumatic fluids are a third class of drilling fluids in which a high velocity stream of air or natural gas removes drill cuttings.

Oil-based drilling fluids are commonly used in the form of invert emulsion muds. An oil-based invert emulsion mud consists of three phases: an oleaginous phase, a non-oleaginous phase, and a finely divided particle phase. The oleaginous phase is generally a natural or synthetic oil which forms the continuous exterior phase of the invert emulsion mud. The non-oleaginous phase is an aqueous solution usually containing a salt (i.e., brine) that forms the emulsified internal aqueous phase of the invert emulsion mud. The particle phase is made up generally of finely divided solids typically containing an organophilic clay viscosifier and/or suspension additive for adjusting the rheological properties of the drilling fluid. Also typically included are emulsifiers and emulsifier systems, weighting agents, fluid loss additives, alkalinity regulators and the like, for stabilizing the system as a whole and controlling fluid loss and rheology. Full particulars can be found, for example, in the Article by P. A. Boyd et al. entitled "New Base Oil Used in Low-Toxicity Oil Muds" in the Journal of Petroleum Technology, 1985, 137 to 142 and in the Article by R. B. Bennet entitled "New Drilling Fluid Technology-Mineral Oil Mud" in the Journal of Petroleum Technology, 1984, 975 to 981 and the literature cited therein.

It is important that the driller of subterranean wells be able to control the rheological properties of drilling fluids. Control of drilling fluid rheology is desirable in terms of enhancing the suspension characteristics of the fluid for the removal of drill cuttings as well as reducing the pressure drop in the drillpipe. While the viscosity of drilling fluids at high shear rates affect the pressure drop in the drillpipe and annulus, the viscosity of the drilling fluid at low shear rates influences the suspending and solids (i.e., weighting agents, drill cuttings) carrying capacity of the drilling fluid. Drilling fluid rheology at high shear rates is commonly referred to as the plastic viscosity (PV), or high shear rate viscosity, as defined by the Bingham plastic model (τ = PV(γ) + YP, wherein τ is the shear stress [force/area; lb/100 ft²] applied to the drilling fluid, and γ is the shear rate [time⁻¹]). Rheology at low shear rates is often characterized by the yield stress (YP), also referred to as the low shear rate viscosity, as defined by the Bingham model. The Bingham model is widely employed to describe fluid flow in the drilling fluids industry. Thus, it is desirable that YP is high enough to adequately suspend and carry the drill cuttings out of the hole while maintaining PV as low as possible in order to reduce the pressure drop in the drillpipe during fast drilling applications.

Controlling the rheology of conventional oil-based invert emulsion drilling fluids typically requires adjusting the rheology of the freshly prepared drilling fluids or modifying the rheology of previously used drilling fluids one or more times in order to treat the fluid during drilling applications. A primary challenge in adjusting the rheology of conventional oil-based drilling fluids is to increase the low shear rate viscosity (YP) for enhancing the suspension properties of the mud without causing a significant increase in the high shear rate viscosity (PV) and pressure drop in the drillpipe. Currently, the YP of an oil-based invert emulsion drilling fluid is typically increased by dispersing additives, such as additional organophilic clays and polymeric materials in the continuous oil phase of the drilling fluid. Although this conventional method increases YP, the additional organophilic clays and polymeric materials added to the continuous oleaginous phase also tend to produce an undesirably large increase in PV.

The problem of undesirably high PV in conventional oil-based invert emulsion fluids further viscosified by the addition of more organophilic clays is exacerbated during high temperature drilling applications. As drilling depths increase and bottom hole temperatures reach temperatures as high as 149°C (300°F), one particular problem of current drilling fluids is the loss of the desired rheology of the drilling fluid due to the thermal degradation of the organophilic clay viscosifier. During high temperature drilling operations in excess of about 93°C (200°F), the organophilic clay, which is usually pre-treated with long chain fatty amines to provide hydrophobically modified clay, is susceptible to chain breakdown thereby rendering the organophilic clay inert. In high temperature applications, the inert clay contributes to an increase in PV only with little contribution to YP thereby causing a loss in the desired rheology of the drilling fluid. Thus, there is a need for an alternative method of adjusting the rheology of oil-based invert emulsion drilling fluids to increase the YP while minimizing a concomitant increase in the PV of the drilling fluid, particularly in high temperature drilling fluid applications.

US 5559085 proposes an oil based drilling fluid in which water is added to make an inverted emulsion. The fluid includes a viscosifier.

### SUMMARY

A first aspect of the present invention provides an invert emulsion drilling fluid according to claim 1. A second aspect of the present invention provides a method of increasing the viscosity of an invert emulsion drilling fluid according to claim 5.

The aqueous-phase viscosifiers of the present invention may be added to the non-oleaginous fluid of a conventional oil-based invert emulsion drilling fluid formulation to adjust the rheology of the drilling fluid by increasing the low shear viscosity without causing a significant increase in the high shear viscosity of the drilling fluid. The aqueous-phase viscosifiers in drilling fluid formulations of the present invention are thermally stable at temperatures at least as high as 121°C (250°F) and thus particularly suitable for providing drilling fluids that exhibit enhanced suspension properties during high temperature drilling applications.

One of skill in the art should also understand and appreciate that the claimed subject matter includes the use of the fluids disclosed herein during the drilling of a subterranean well.

These and other features are more fully set forth in the following description of preferred or illustrative embodiments of the disclosed and claimed subject matter.

### DESCRIPTION OF ILLUSTRATIVE EMBODIMENTS

The subject matter of the present disclosure is generally directed to an oil-based invert emulsion drilling fluid formulated to include an oleaginous fluid that forms the continuous phase of the drilling fluid, a non-oleaginous fluid that forms the discontinuous phase of the drilling fluid, and an aqueous-phase viscosifier being a synthetic ionic polymer, dispersed in the non-oleaginous fluid in a sufficient concentration to increase a low shear viscosity of the invert emulsion drilling fluid. The aqueous-phase viscosifier additive of the present disclosure is a component of the drilling fluid formulation to provide enhanced suspension characteristics to the drilling fluid by substantially increasing the YP of the drilling fluid without increasing the high shear viscosity to any appreciable extent. In addition, the aqueous-phase viscosifier additives of the present invention are salt tolerant and thermally stable at temperatures at least as high as 121°C (250°F) for high temperature drilling fluid applications. Individual components of drilling fluid formulations of the present invention is disclosed in greater detail below.

Oleaginous fluids suitable for use in the present invention include known natural or synthetic oils generally used in oil-based invert emulsion drilling fluids. Suitable oleaginous fluids include mineral oil, synthetic oil such as polyolefins, polydiorganosiloxanes, siloxanes or organosiloxanes, diesel oil, crude oil, esters, ethers, acetals, di-alkylcarbonates, as well as combinations and mixtures of these and similar compounds that should be known to one of skill in the art. The concentration of the oleaginous fluid should be sufficient such that an invert emulsion forms. In one embodiment the oleaginous fluid is present in a volume ratio to the non-oleaginous fluid of from about 30:70 to about 95:5, and more preferably from about 50:50 to about 80:20. The oleaginous fluid in one embodiment may include a mixture of internal olefin and alpha olefins. As is disclosed in commonly assigned U.S. patent publication 2005/0054539, entitled "ENVIRONMENTALLY COMPATIBLE HYDROCARBON BLEND DRILLING FLUID," a combination of internal and alpha olefins can be used to create a drilling fluid having a desirable balance of properties such as toxicity and biodegradability. Specifically, in one illustrative embodiment a mixture of a C₁₆₋₁₈ internal olefin, a C₁₅₋₁₈ internal olefin, a C₁₅₋₁₆ internal olefin, and a C₁₆ alpha olefin is made with a weight ratio of 5/2/1.5/1.5, respectively, for providing an oleaginous fluid having a desirable balance of toxicity and biodegradability properties.

Non-oleaginous fluids suitable for use in the present invention include known liquids generally used in oil-based invert emulsion drilling fluids. Suitable non-oleaginous fluids include fresh water, sea water, water containing organic and/or inorganic dissolved salts (i.e., brine) such as calcium chloride, sodium chloride, and the like, liquids containing water-miscible organic compounds, combinations of these and similar compounds that should be known to one of skill in the art. The concentration of the non-oleaginous fluid is typically less than the theoretical maximum limit for forming an invert emulsion. In one illustrative embodiment the amount of non-oleaginous fluid is less than about 70% by volume of the drilling fluid and preferably present in a volume ratio to the oleaginous fluid of from about 50:50 to about 20:80.

An emulsifier is included in the drilling fluid formulation so as to form a useful and stable invert emulsion of the particular oleaginous and non-oleaginous fluids selected for use in the drilling fluid. Suitable emulsifiers include fatty acids, soaps of fatty acids, amidoamines, polyamides, polyamines, oleate esters such as sorbitan monoleate, sorbitan dioleate, imidazoline derivatives or alcohol derivatives, and combinations and derivatives thereof. Blends of these materials as well as other emulsifiers that should be known to one of skill in the art can be used for this application. The emulsifier should be present in a concentration sufficient to sustain a stable invert emulsion that is useful for rotary drilling. Other surfactant compounds may also be used in conjunction with the emulsifier utilized herein. In such cases, it is preferable that the quantity and nature of these supplemental surfactants should not interfere in the ability and properties given the invert emulsion drilling fluid by the aqueous-phase viscosifier to act as described herein.

One comparative example of an aqueous-phase viscosifier is a biopolymer additive. Suitable biopolymer additives include polysaccharides, such as xanthan, scleroglucan, guar, and welan gum. Other polysaccharides may also be used as a suitable biopolymer additive. The concentration of the polysaccharide additive should be sufficient to achieve the desired increase in the YP of the drilling fluid. In one illustrative comparative example the biopolymer additive is present in a concentration in the range of about 0.1 percent by weight of the water in the non-oleaginous fluid (i.e., wt.% water) to about 1.5 wt.% water. Preferably the biopolymer additive is present in a concentration in the range of about 0.3 wt.% water to about 1.0 wt.% water. For illustrative purposes, Examples 1 and 2 below provide rheological measurements of drilling fluids containing a biopolymer additive of the present invention after heat aging the drilling fluids at 121° (250°F) in order to illustrate the thermal stability and enhanced rheology (e.g., YP and PV values) of these drilling fluids at temperatures at least as high as 121°C (250°F).

Another comparative example of an aqueous-phase viscosifier is a salt tolerant clay additive. Suitable salt tolerant clay additives include any water-dispersible clay preferably with at least some salt tolerance. In one example, sepiolite (e.g., Durogel, commercially available from M-I L.L.C.) which is a needle-like clay has good salt tolerance and performs well as an aqueous-phase viscosifier. Other salt tolerant clay additives may be used as suitable aqueous-phase viscosifiers. The concentration of the salt tolerant clay additive should be sufficient to achieve the desired increase in the YP of the drilling fluid. In one comparative example, the salt tolerant clay additive is present in a concentration in the range of about 2 wt.% water to about 12 wt.% water. Preferably the salt tolerant clay additive is present in a concentration in the range of about 4 wt.% water to about 8 wt.% water. As illustrated below in the following Examples 1 and 2, the rheological measurements of drilling fluids containing a salt tolerant clay additive of the present invention are performed after heat aging the drilling fluids at 121°C (250°F) in order to illustrate the thermal stability and enhanced rheology of these drilling fluids at temperatures at least as high as 121°C (250°F).

The aqueous-phase viscosifier according to the present invention is a synthetic ionic polymer compatible with the water of the aqueous phase (e.g., a brine). Examples of suitable ionic polymers include Ionic Polymer version A (commercially available from Degussa) and D-178 Plus (available from Drilling Specialties). Other ionic polymer additives may be used as suitable aqueous-phase viscosifiers. Although not wishing to be bound by any specific theory of action, it is believed that ionic polymers having both hydrophobic and hydrophilic moeties function at the interface of the internal aqueous-phase droplets to increase the viscosity of the drilling fluid. Regardless of the mode of action, it has been found that the addition of ionic polymers, as disclosed herein, to drilling fluids results in the viscosity properties observed and disclosed below. The concentration of the ionic polymer additive should be sufficient to achieve the desired increase in the YP of the drilling fluid. The ionic polymer additive is present in a concentration in the range of about 0.5 wt.% water to about 5 wt.% water. Preferably the ionic polymer additive is present in a concentration in the range of about 1 wt.% water to about 3 wt.% water. As illustrated below in the following Examples 1 and 2, the rheological ionic measurements of drilling fluids containing a synthetic ionic polymer additive of the present invention are performed after heat aging the drilling fluids at 121°C (250°F) to illustrate the thermal stability and enhanced rheology of these drilling fluids at temperatures at least as high as 121°C (250°F).

Conventional methods can be used to prepare the oil-based invert emulsion drilling fluids of the present invention in a manner analogous to those normally used to prepare conventional oil-based invert emulsion drilling fluids. In one representative procedure, the aqueous-phase viscosifier is dissolved in the aqueous internal phase and subsequently emulsified in a desired quantity of oleaginous fluid such as a base oil and a suitable amount of the emulsifier by vigorously agitating, mixing or shearing the fluid component mixture. Additional fluid components may be added to the fluid mixture with continuous mixing.

The drilling fluids of the present invention further contain additional conventional components depending upon the end use of the invert emulsion mud, including, but not limited to: organophilic clay and polymeric viscosifiers, alkali reserve materials, wetting agents, weighting agents, bridging agents, fluid loss control agents, and other conventional invert emulsion drilling fluid components for additional functional properties. The addition of such components should be well known to one of skill in the art of formulating invert emulsion drilling fluids.

Organophilic clays, normally amine treated clays, are viscosifiers dispersed in the oleaginous phase of the drilling fluid compositions of the disclosed subject matter, as is conventional in the formulation of oil-based invert emulsion drilling fluids. Exemplary suitable organophilic clay viscosifiers include bentonite, hectorite, attapulgite, and the like, as is well known in the art. For most invert emulsion applications, the amount of organophilic clay used in the drilling fluid formulation is in the range of about 0.1% to about 6% by weight of the drilling fluid. Other suitable organoclays include VG-69, VG PLUS, VG SUPREME, and Versa-HRP, all distributed by M-I L.L.C. In addition, a wide variety of polymeric materials may be used as viscosifiers in the fluid compositions of the present invention. Exemplary suitable polymeric materials include non-functionalized copolymers such as styrene-butadiene block copolymers, functional polymers such as sulfonated polystyrene, fatty acids and their derivatives, as well as combinations and mixtures of these and similar compounds that should be known to one of skill in the art.

It is conventional in many invert emulsions to include an alkali reserve so that the overall fluid formulation is basic (i.e., pH greater than 7). Typically this is in the form of lime or alternatively mixtures of alkali and alkaline earth oxides and hydroxides. One of skill in the art should understand and appreciate that the lime content of a drilling fluid will vary depending upon the operations being undertaken and the formations being drilled. Further it should be appreciated that the lime content, also known as alkalinity or alkaline reserve is a property that is typically measured in accordance with the applicable API standards which utilize methods that should be well know to one of skill in the art of mud formulation.

Exemplary wetting agents (oil-wetting agents) that may be suitable for use in the fluid compositions of the disclosed subject matter include, crude tall oil, oxidized crude tall oil, organic phosphate esters, modified imidazolines and amidoamines, oleic acid based wetting agents, alkyl aromatic sulfates and sulfonates, and the like, and combinations or derivatives of these. Versawet.RTM, Versawet.RTM.NS, and EMI-157 are examples of wetting agents, commercially available from M-I L.L.C., that may be used in the disclosed drilling fluids. Silwet L-77, L-7001, L7605 and L-7622 are examples of other applicable surfactants and wetting agents commercially available from Union Carbide Chemical Company Inc.

Weighting agents, bridging agents, or density materials suitable for use in the described drilling fluids include galena, hematite, magnetite, iron oxides, illmenite, barite, siderite, celestite, dolomite, calcite, as well as combinations, and mixtures of these and similar compounds that should be known to one of skill in the art. The quantity of such material added, if any, depends upon the desired density of the final composition. Typically, weight material is added to result in a drilling fluid density of up to about 2,9kg/l (24 pounds oper gallon) drilling fluid. The weight material is preferably added up to 2.5 kg/l (21 pounds per gallon) and most preferably up to 2.3 kg/l 19.5 pounds per gallon) drilling fluid.

Fluid loss control agents typically act by coating the walls of the borehole as the well is being drilled. Suitable fluid loss control agents which may find utility in this invention include modified lignites, asphaltic compounds, gilsonite, organophilic humates prepared by reacting humic acid with amides or polyalkylene polyamines, and other non-toxic fluid loss additives. Typically, fluid loss control agents are added in amounts less than about 10% and preferably less than about 5% by weight of the drilling fluid.

Another embodiment of the present disclosure generally provides a method of increasing the low shear viscosity of an oil-based invert emulsion drilling fluid without resorting to the conventional method of adding more organophilic clays or polymeric additives to the continuous oil phase. The method of increasing the YP of an invert emulsion drilling fluid includes providing an oil-based invert emulsion drilling fluid having an oleaginous fluid that forms the continuous phase of the drilling fluid, and a non-oleaginous fluid that forms the discontinuous internal aqueous phase of the drilling fluid; and adding an aqueous-phase viscosifier, wherein the aqueous-phase viscosifier is dispersed in the non-oleaginous fluid in a sufficient concentration to increase the low shear viscosity of the drilling fluid. As described above, the aqueous-phase viscosifiers of the present invention is a synthetic ionic polymer. At least one of the aqueous-phase viscosifiers is added to the non-oleaginous fluid of the oil-based invert emulsion drilling fluid in order to increase the YP of the fluid without causing a significant increase in the PV of the drilling fluid.

In one embodiment, aqueous-phase viscosification is a technique employed for improving the rheological properties of a drilling fluid that has been viscosified already by conventional additives such as organoclays and/or polymeric materials. In particular, the improvement in rheological properties includes increasing the low shear viscosity of the drilling fluid while have a relatively insignificant impact on the high shear viscosity of the drilling fluid. In one embodiment of the present disclosure
the method of viscosification can be used to modify the rheology of a freshly prepared oil-based invert emulsion drilling fluid having conventional organoclays and/or polymeric materials present in the continuous oil-phase of the drilling fluid. Addition of the aqueous-phase viscosifier to the internal aqueous phase of the invert emulsion drilling fluid increases the drilling fluids' YP while having a relatively insignificant impact on the drilling fluids' PV.

In another embodiment of the present disclosure the method of viscosification can be used to treat a previously used oil-based invert emulsion drilling fluid, typically having organoclays and/or polymeric materials in the continuous oil-phase of the drilling fluid, in order to modify the rheology of the drilling fluid during or after drilling operations. Treatment of the used drilling fluid by the addition of the aqueous-phase viscosifier to the internal aqueous phase of the invert emulsion drilling fluid increases the drilling fluids' low shear viscosity (YP) while having a relatively insignificant impact on the drilling fluids' high shear viscosity (PV).

The disclosed oil-based invert emulsion drilling fluid formulations exhibit enhanced suspension properties particularly suitable for drilling, completing and working over of subterranean oil and gas wells. The drilling fluid formulations containing the aqueous-phase viscosifiers of the present invention provide drilling fluids most suitable for high temperature drilling applications. In particular, the drilling fluid formulations exhibit increased YP without causing a significant increase in PV in high temperature drilling applications in a range of about 79°C (175°F) to about 149°C (300°F). The drilling fluid formulations are useful as drilling muds and completion fluids for use in high deviation wells and long reach wells in order to reduce the pressure drop in the drillpipe and enhance the suspension and solids carrying capacity of the drilling fluid, particularly in high temperature drilling operations. The drilling fluids may also be used as packing fluids, fracturing fluids and other similar well bore uses in which increasing the YP of the drilling fluid is desirable without concurrently causing a significant increase in the PV of the drilling fluid. The utility of well bore fluids and invert emulsion fluids disclosed in this document should be known to one of skill in the art as is noted in the book COMPOSITION AND PROPERTIES OF DRILLING AND COMPLETION FLUIDS, 5th Edition, H. C. H. Darley and George R. Gray, Gulf Publishing Company, 1988.

The following examples are included to demonstrate preferred embodiments of the claimed subject matter. It should be appreciated by those of skill in the art that the techniques and compositions disclosed in the examples which follow represent techniques discovered by the inventor to function well and thus can be considered to constitute preferred modes of practice. However, those of skill in the art should, in light of the present disclosure, appreciate that many changes can be made in the specific embodiments which are disclosed and still obtain a like or similar result without departing from the scope of the claimed subject matter.

### General Information Relevant to the Examples

These tests were conducted in accordance with the procedures in API Bulletin RP 13B-2, 1990. The following abbreviations are sometimes used in describing the results of experimentation.

"PV" is plastic viscosity which is one variable used in the calculation of viscosity characteristics of a drilling fluid, measured in centipoises [cP] units.

"YP" is yield point, which is another variable used in the calculation of viscosity characteristics of drilling fluids, measured in Pascals [Pa] and in brackets in pounds per 100 square feet [lb/100 ft²].

"GEL" is a measure of the gel strength or suspending characteristics of a drilling fluid, measured in Pascals [Pa] and in brackets in pounds per 100 square feet [lb/100 ft²]; 10 Min. Gel (i.e., 10-minute gel) refers to the suspending characterisitics of the drilling fluid after the fluid is static for 10 minutes, measured in [Pa] and in brackets in [lb/100 ft²]; 10 Sec. Gel (i.e., 10-second gel) refers to the suspending characterisitics of the drilling fluid after the fluid is static for 10 seconds, measured in [Pa] and in brackets in [lb/100 ft²].

The components of the claimed drilling fluids include oleaginous fluid, a non-oleaginous fluid, an emulsifier, and a viscosity modifier dispersed in the non-oleaginous fluid phase. Other chemicals used to make-up the drilling fluids of the present invention are basically the same as those typically used in formulating conventional oil-based invert emulsion drilling fluid systems. An illustrative embodiment of a drilling fluid formulation containing the viscosity modifiers of the present invention is given below.

### EXAMPLE 1

### Mud Formulation and Effect of Aqueous-Phase Viscosifier on YP

The composition of an exemplary typical oil-based invert emulsion drilling fluid having calcium chloride brine as the non-oleaginous (i.e., aqueous) phase is provided in Table 1. The fluid has a density of 1.6 kg/l (13.0 lb/gal) and an oil-to-water ratio of 80/20. The base mud was formulated by adding the components in the order similar to that listed in Table 1. Each of the component concentrations is based on a lab barrel (i.e., 350.4 ml) of fluid. Mixing of the disclosed drilling fluid formulation may be performed as is standard in the art for mixing other invert emulsion fluids. Such processes should be well known to one of skill in the art of drilling fluid formulation. OCMA Clay is included in the base mud formulation to simulate the presence of drill solids.

**TABLE 1**

| Composition of a typical oil-based invert emulsion drilling fluid having an aqueous phase of calcium chloride brine | |
|---|---|
| Base Mud Formulation | Concentration [g/lab bbl] |
| Mineral Oil | 168.5 |
| Invert Emulsifier | 3.0 |
| Oil-Wetting Agent | 4.55 |
| Organoclay | 4.55 |
| Lime | 7.7 |
| Water | 51.2 |
| Calcium Chloride | 18.31 |
| Barite | 273.4 |
| OCMA Clay | 15.0 |

In order to compare performance of the drilling fluids of the present invention, mud samples were prepared by adding comparative aqueous-phase viscosifier additives and the aqueous-phase viscosifier additive of the present invention to the calcium chloride brine phase of the base mud formulation provided in Table 1. Rheological characteristics of the mud samples containing 0.5 wt. % scleroglucan ("A"), 6 wt. % sepiolite ("B"), and 2% wt. % Ionic Polymer version A ("C") in the calcium chloride brine phase were measured after heat aging by hot rolling the samples at 121°C (250°F) for about 16 hours, as shown in Table 2. For comparison purposes, the rheological characteristics of the base mud formulation before hot rolling (BHR) is also included in Table 2. The rheology data of the mud samples at the various rotational speeds (rpm) indicated was measured at 50°C (122°F) using a Fann 35 Viscometer. Subsequently, the rheology data was plotted as a function of rpm, and the slopes of the data points (i.e., PV) and y-intercepts (i.e., YP) were calculated using a linear trend function.

**TABLE 2**

| Rheological properties of the base mud and base muds containing aqueous-phase viscosifier additives A, B, and C after hot rolling (AHR) at 121°C (250°F) for 16 hours | | | | | |
|---|---|---|---|---|---|
| Fann Rheology at various rpms [Pa (lb/100 ft²) | Base Mud | Base Mud | Base Mud + 0.5 wt.% A in brine | Base Mud + 6 wt.% B in brine | Base Mud + 2 wt.% C in brine |
| | BHR | AHR | AHR | AHR | AHR |
| 600 rpm | 25 (53) | 26(54) | 28 (58) | 28 (59) | 41 (85) |
| 300 rpm | 15 (32) | 15(31) | 16 (34) | 16(34) | 26 (54) |
| 200 rpm | 11 (23) | 11(22) | 12 (25) | 13 (27) | 21 (44) |
| 100 rpm | 7.2 (15) | 6.7 (14) | 7.7 (16) | 8.6(18) | 14(30) |
| 6 rpm | 3.3 (7) | 2.4 (5) | 3.3 (7) | 3.3 (7) | 5.3 (11) |
| 3 rpm | 2.9 (6) | 2.4 (5) | 2.9 (6) | 3.3 (7) | 4.8 (10) |
| 10 Sec. Gel | 4.8(10) | 2.9 (6) | 2.9 (6) | 3.3 (7) | 4.3 (9) |
| 10 Min. Gel | 9.6 (20) | 4.8 (10) | 5.3 (11) | 5.3 (11) | 6.2 (13) |
| PV[cP] | 21 | 23 | 24 | 25 | 31 |
| YP[Pa (lb/100 ft²)] | 5.3 (11) | 3.8 (8) | 4.8 (10) | 4.3 (9) | 11 (23) |

The rheological performance of the muds treated with the aqueous-phase viscosifiers of the present invention exhibit a significant increase in the YP and a relatively small increase in PV. As compared to the rheology performance of base mud after hot rolling, the mud sample containing scleroglucan as the aqueous-phase viscosifier demonstrated a substantial increase in YP of 25% while PV only minimally increased by 4%. The mud sample containing sepiolite as the aqueous-phase viscosifier demonstrated an increase in YP of 12% and an increase in PV of 9%. The mud sample containing Ionic Polymer version A as the aqueous-phase viscosifier exhibited a large increase in YP of 187% and a relatively small increase in PV of 35%. The results demonstrate that introduction of the aqueous-phase viscosifiers provides drilling fluids with enhanced suspension characteristics, as indicated by the substantial increase in YP, without causing a significant increase in the PV of the drilling fluid which can result in undesirably high pressure drop in a drillpipe.

### EXAMPLE 2

### Effect of Aqueous-Phase Viscosifier on Barite Sag

Dynamic sag measurements were made for each of the mud samples, prepared as in Example 1, containing 0.5 wt. % scleroglucan ("A"), 6 wt. % sepiolite ("B"), and 2% wt. % Ionic Polymer version A ("C") in the calcium chloride brine phase after hot rolling the samples at 250 °F for about 16 hours. The dynamic sag measurements were performed using a modified Viscometer Sag Test method developed by D.T. Jefferson, "New Procedure Helps Monitor Sag in the Field," ASME 91-PET-3 presented at the Energy-Sources Technology Conference and Exhibition, New Orleans, LA, Jan. 20-24, 1991. A Fann 35 rotational viscometer was used to shear each of the mud samples at a fixed rate of 170.3 per second (i.e., 100 rpm on the viscometer) for 30 minutes at 49°C (120°F). The particular shear rate is selected to approximate the prevalent shear rates experienced downhole in the annular space surrounding the drillpipe. Dynamic sag is a measurement of the change in mud density (ΔMW) after 30 minutes of shear. The data for dynamic sag ΔMW and several key rheological properties are provided in Table 3.

Upon inspection of the data in Table 3, each of the mud samples containing additives A, B, and C exhibit smaller changes in mud density of 2.142 ppg, 2.22 ppg, and 1.892 ppg, respectively, as compared to the base mud which exhibits a change in mud density of 2.653 ppg. In other words, the particular mud formulations used in this illustrative example demonstrate a reduction in barite settling of approximately 16%, 19%, and 29% for additives B, A, and C, respectively. This example demonstrates that the addition of the aqueous-phase viscosifiers to the aqueous-phase of the oil-based drilling fluid results in an improvement on barite sag control.

**TABLE 3**

| Reduction in dynamic barite sag ΔMW [ppg] in oil-based muds containing aqueous-phase viscosifier additives A, B, and C after hot rolling (AHR) at 121°C (250°F) for 16 hours | | | | |
|---|---|---|---|---|
| | Base Mud AHR | Base Mud + 0.5 wt.% A in brine AHR | Base Mud + 6 wt.% B in brine AHR | Base Mud + 2 wt.% C in brine AHR |
| 3 rpm [Pa (lb/100 ft²)] | (5) | 2.9 (6) | 3.4 (7) | 4.8 (10) |
| PV [cP] | 23 | 24 | 25 | 31 |
| YP [Pa (lb/100 ft²)] | 3.8 (8) | 4.8 (10) | 4.3 (9) | 11 (23) |
| ΔMW [ppg] | 2.653 | 2.142 | 2.22 | 1.892 |
| Reduction in ΔMW [%] | ---- | 19.3 | 16.3 | 28.7 |

The present invention provides a superior method for increasing YP and reduces the need for addition of more organoclay or polymeric additives to the oil phase so as to avoid the problem of high PV, particularly during high temperature drilling applications. Upon review of the above representative data, one of ordinary skill in the art should understand and appreciate that the addition of aqueous-phase viscosifier additives of the present invention to the aqueous phase of oil-based invert emulsion drilling fluid formulations substantially improves the YP and barite sag performance of these drilling fluids while producing a relatively small change in the PV of the drilling fluids. A notable advantage of the present invention is that only small concentrations of the aqueous-phase viscosifier additives are required to adjust the rheology (i.e., increase the YP) of a conventionally formulated oil-based invert emulsion drilling fluid. Furthermore, the aqueous-phase viscosifier additives of the present invention are thermally stable at temperatures of at least 121°C (250°F), and thus particularly useful to adjust the rheology of oil-based invert emulsion drilling fluids for high temperature drilling applications.

While the foregoing is directed to embodiments of the present invention, other and further embodiments of the invention may be devised without departing from the basic scope thereof, and the scope thereof is determined by the claims that follow.

## Claims

1. An invert emulsion drilling fluid comprising:
an oleaginous fluid, wherein the oleaginous fluid is the continuous external phase of the drilling fluid;
a non-oleaginous fluid, wherein the non-oleaginous fluid is the discontinuous internal aqueous phase of the drilling fluid; and
a viscosifier which is a synthetic ionic polymer;
**characterized in that** the viscosifier is an aqueous-phase viscosifier which is dispersed in the non-oleaginous fluid in a concentration in a range from 0.5 wt.% to 6 wt.% of the water present in the non-oleaginous fluid.

2. The invert emulsion drilling fluid of claim 1 further comprising a weighting agent or a bridging agent.

3. The invert emulsion drilling fluid of claim 1 further comprising an emulsifier.

4. The invert emulsion drilling fluid of claim 1, wherein the ionic polymer comprises both hydrophobic and hydrophilic moieties, such that the polymer can function at the interface of internal aqueous-phase droplets to increase the viscosity of the drilling fluid.

5. A method of increasing the viscosity of an invert emulsion drilling fluid comprising:
providing an oil-based invert emulsion drilling fluid including an oleaginous fluid, wherein the oleaginous fluid is the continuous external phase of the drilling fluid, and a non-oleaginous fluid, wherein the non-oleaginous fluid is the discontinuous internal aqueous phase of the drilling fluid; and
adding an aqueous-phase viscosifier to the non-oleaginous fluid, wherein the aqueous-phase viscosifier is dispersed in the non-oleaginous fluid in a concentration in a range from 0.5 wt.% to 6 wt.% of the water present in the non-oleaginous fluid, and wherein the aqueous-phase viscosifier is a synthetic ionic polymer.

6. The method of claim 5 wherein the oil-based invert emulsion drilling fluid further includes a weighting agent or a bridging agent.

## Patentansprüche

1. Wasser-in-Öl-Emulsionsbohrspülung, die Folgendes umfasst:
eine ölige Flüssigkeit, wobei die ölige Flüssigkeit die äußere, kontinuierliche Phase der Bohrspülung ist;
eine nichtölige Flüssigkeit, worin die nichtölige Flüssigkeit die innere, diskontinuierliche wässrige Phase der Bohrspülung ist; und
einen Verdicker, der ein synthetisches ionisches Polymer ist;
**dadurch gekennzeichnet, dass** der Verdicker ein Wasserphasen-Verdicker ist, der in der nichtöligen Flüssigkeit in einer Konzentration in einem Bereich von 0,5 Gew.-% bis 6 Gew.-% des in der nichtöligen Flüssigkeit vorhandenen Wassers dispergiert ist.

2. Wasser-in-Öl-Emulsionsbohrspülung nach Anspruch 1, die weiters ein Beschwerungsmittel oder ein Verbrückungsmittel umfasst.

3. Wasser-in-Öl-Emulsionsbohrspülung nach Anspruch 1, die weiters einen Emulgator umfasst.

4. Wasser-in-Öl-Emulsionsbohrspülung nach Anspruch 1, worin das ionische Polymer sowohl hydrophobe als auch hydrophile Gruppierungen umfasst, so dass das Polymer an der Grenzfläche innerer Wasserphasen-Tröpfchen wirken kann, um die Viskosität der Bohrspülung zu erhöhen.

5. Verfahren zum Erhöhen der Viskosität einer Wasser-in-Öl-Emulsionsbohrspülung, das Folgendes umfasst:
Bereitstellen einer Wasser-in-Öl-Emulsionsbohrspülung auf Ölbasis, die eine ölige Flüssigkeit, wobei die ölige Flüssigkeit die äußere, kontinuierliche Phase der Bohrspülung ist, und eine nichtölige Flüssigkeit, wobei die nichtölige Flüssigkeit die innere, diskontinuierliche wässrige Phase der Bohrspülung ist, umfasst; und
Zusetzen eines Wasserphasen-Verdickers zur nichtöligen Flüssigkeit, wobei der Wasserphasen-Verdicker in der nichtöligen Flüssigkeit in einer Konzentration in einem Bereich von 0,5 Gew.-% bis 6 Gew.-% des in der nichtöligen Flüssigkeit vorhandenen Wassers dispergiert ist und wobei der Wasserphasen-Verdicker ein synthetisches ionisches Polymer ist.

6. Verfahren nach Anspruch 5, worin die Wasser-in-Öl-Emulsionsbohrspülung auf Ölbasis weiters ein Beschwerungsmittel oder ein Verbrückungsmittel umfasst.

## Revendications

1. Fluide de forage à émulsion inverse, comprenant :
un fluide oléagineux, dans lequel le fluide oléagineux est la phase externe continu du fluide de forage ;
un fluide non-oléagineux, dans lequel le fluide non-oléagineux est le phase aqueuse interne discontinue du fluide de forage ; et
un viscosifiant qui est un polymère ionique synthétique ;
**caractérisé en ce que** le viscosifiant est un viscosifiant en phase aqueuse qui est dispersé dans le fluide non-oléagineux selon une concentration dans la plage de 0,5 % en poids à 6 % en poids de l'eau présente dans le fluide non-oléagineux.

2. Fluide de forage à émulsion inverse selon la revendication 1, comprenant en outre un agent alourdissant ou un agent pontant.

3. Fluide de forage à émulsion inverse selon la revendication 1, comprenant en outre un émulsifiant.

4. Fluide de forage à émulsion inverse selon la revendication 1, dans lequel le polymère ionique comprend à la fois des fragments hydrophobes et hydrophiles, de sorte que le polymère peut fonctionner au niveau de l'interface de gouttelettes internes en phase aqueuse pour augmenter la viscosité du fluide de forage.

5. Procédé pour augmenter la viscosité d'un fluide de forage à émulsion inverse, comprenant les étapes consistant à :
fournir un fluide de forage à émulsion inverse à base d'huile comprenant un fluide oléagineux, dans lequel le fluide oléagineux est la phase externe continue du fluide de forage, et un fluide non-oléagineux, dans lequel le fluide non-oléagineux est la phase aqueuse interne discontinue du fluide de forage ; et
ajouter un viscosifiant en phase aqueuse au fluide non-oléagineux, dans lequel le viscosifiant en phase aqueuse est dispersé dans le fluide non-oléagineux selon une concentration dans la plage de 0,5 % en poids à 6 % en poids de l'eau présente dans le fluide non-oléagineux, et dans lequel le viscosifiant en phase aqueuse est un polymère ionique synthétique.

6. Procédé selon la revendication 5, dans lequel le fluide de forage à émulsion inverse à base d'huile comprend en outre un agent alourdissant ou un agent pontant.
